(19) Europäisches Patentamt
European Patent Office
Office européen des brevets

(11) **EP 0 679 738 B1**

(12) **EUROPÄISCHE PATENTSCHRIFT**

(45) Veröffentlichungstag und Bekanntmachung des Hinweises auf die Patenterteilung:
**05.08.1998 Patentblatt 1998/32**

(51) Int Cl.$^6$: **D01F 6/70**

(21) Anmeldenummer: **95105479.0**

(22) Anmeldetag: **12.04.1995**

(54) **Verfahren zur Herstellung von Elastanfäden**

Process for the production of spandex yarns

Procédé pour la fabrication de fils d'élastane

(84) Benannte Vertragsstaaten:
**DE ES FR GB IT NL**

(30) Priorität: **25.04.1994 DE 4414327**

(43) Veröffentlichungstag der Anmeldung:
**02.11.1995 Patentblatt 1995/44**

(73) Patentinhaber: **BAYER AG**
**51368 Leverkusen (DE)**

(72) Erfinder:
- **Rehbold, Bodo, Dr.**
  **D-50858 Köln (DE)**
- **Behrens, Hans-Josef, Dipl. Ing.**
  **D-41540 Dormagen (DE)**
- **Haug, Erich, Dr.**
  **D-50259 Pulheim (DE)**
- **Spilgies, Günter, Dr.**
  **D-41540 Dormagen (DE)**
- **Meyer, Rolf-Volker, Dr.**
  **D-51373 Leverkusen (DE)**
- **Müller, Hanns Peter, Dr.**
  **D-51519 Odenthal (DE)**

(56) Entgegenhaltungen:
**DE-A- 1 669 402          DE-B- 1 295 190**

- **CHEMICAL ABSTRACTS, vol. 72, no. 6, 9. Februar 1970 Columbus, Ohio, US; abstract no. 22527r, SHIMIZU T 'Spinning of polyurethane elastic yarns' Seite 57; Spalte 1; & JP-B-44 020 247**

## Beschreibung

Die vorliegende Erfindung betrifft ein Verfahren zur lösemittelfreien Herstellung von elastischen Fäden oder Filamenten auf Basis segmentierter Poly(urethan)e bzw. Poly(urethanharnstoff)e mit verbesserten thermischen Eigenschaften und somit verbessertem Verarbeitungsverhalten, z.B. beim Thermofixieren von Flächenwaren, die die elastischen Fasern enthalten, durch Verwendung eines Isocyanuratgruppen enthaltenden Polyisocyanats bei der Umsetzung langkettiger, höhermolekularer Polyhydroxylverbindungen mit organischen Diisocyanaten und niedermolekularen Diolen sowie ggf. weiterer Hilfs- und Zusatzmittel in der Schmelze, direktes Verspinnen der so erhaltenen Reaktionsmasse und thermische Nachbehandlung der erhaltenen elastischen Fäden. Die Erfindung betrifft auch die aus diesem Verfahren erhältlichen Fäden.

Unter Elastanfilamenten oder -fäden werden Endlosfäden verstanden, die zu mindestens 85 Gew.% aus segmentierten Poly(urethan)en bzw. Poly(urethanharnstoff)en bestehen. Die fadenbildenden Polymere weisen eine Segmentstruktur auf, d.h. sie bestehen aus "kristallinen" und "amorphen" Blöcken ("Hartsegmente" und "Weichsegmente"). Die Hartsegmente wirken aufgrund ihrer "Kristallinität" als Fixpunkte des Netzwerks und sind damit maßgebend für die Festigkeit der aus den Polymeren hergestellten Formkörper oder Fasern. Die Weichsegmente hingegen, deren Glastemperatur unterhalb der Gebrauchstemperatur liegen muß, sind für die Elastizität der Elastomeren maßgebend.

Derartige Elastomere werden üblicherweise durch Polyaddition von langkettigen Dihydroxylverbindungen (Makrodiole) mit Diisocyanaten und niedermolekularen Dihydroxyl- oder Diaminoverbindungen als Kettenverlängerern hergestellt. Für hochwertige Elastanfilamente (Spandex) werden durch Kettenverlängerung mit Diaminen gewonnene Poly(urethanharnstoff)e verwendet, weil sie gegenüber den Diol-verlängerten Poly(urethan)en aufgrund einer größeren Zahl von Wasserstoffbrückenbindungen zwischen den Polymerketten einerseits hohe Hartsegmentschmelzpunkte sowie andererseits ausgezeichnete mechanisch-elastische Eigenschaften aufweisen. Die Elastanfasern werden üblicherweise durch Verspinnen von Lösungen dieser segmentierten Poly(urethanharnstoff)e in hochpolaren Lösemitteln wie Dimethylformamid und Dimethylacetamid mittels des Trockenspinn- oder des Naßspinnverfahrens hergestellt.

Wegen des Verzichts auf diese hochsiedenden, aprotischen Lösemittel ist ein Schmelzspinnverfahren aus ökonomischen und ökologischen Gründen den Lösungsspinnverfahren prinzipiell vorzuziehen. Elastane, z.B. aus diaminverlängerten Poly(urethanharnstoff)en sind jedoch nicht ohne Zersetzung der Harnstoffgruppen in den Hartsegmenten aufschmelzbar, wie z.B. aus Textilpraxis International 36 (1981) Seite 841 hervorgeht. Diese sind somit aus der Schmelze nicht verarbeitbar. Demgegenüber lassen sich sogenannte thermoplastische Poly(urethan)e mit überwiegend Urethan-Hartsegmenten, die durch Kettenverlängerung mit niedermolekularen Diolen statt Diaminen erhalten werden, mit begrenztem Molmassen-Abbau aus der Schmelze zu elastischen Fäden verspinnen. Der Einsatz derartiger Filamente wird jedoch dadurch eingeschränkt, daß sie aufgrund geringerer bindender Wechselwirkungen ihrer Hartsegmente und der damit verbundenen niedrigeren Erweichungstemperatur den bei der üblichen Verarbeitung und Behandlung von Elastanen auftretenden thermischen Belastungen nicht standhalten. Dies trifft insbesondere für die Thermofixierbarkeit der elastischen Fäden bei der Verarbeitung mit Polyamid als Hartfaserkomponente bei 195°C zu. So führt die Verarbeitung handelsüblicher thermoplastischer Poly(urethan)e nicht zu brauchbaren Filamenten bzw. Flächenwaren.

Zur Erhöhung der thermischen Stabilität elastischer Fäden aus thermoplastischen Poly(urethan)en müssen die bindenden Wechselwirkungen zwischen den Makromolekülen, insbesondere zwischen den Hartsegmenten verbessert werden.

Nach dem Stand der Technik kann dies durch Erhöhung der Kristallinität der Hartsegmente geschehen. So werden in der DE-3233384 Al Poly(urethan)-Elastomere beschrieben, deren Hartsegmente trans-1,4-Cyclohexandiisocyanat und bisethoxyliertes Bisphenol A enthalten und die sich durch einen Hartsegmentaufbau mit hoher Ordnung und Kristallinität auszeichnen. Die daraus durch Schmelzspinnen hergestellten elastischen Fäden besitzen einen Erweichungspunkt, der hoch genug ist, um das Fasermaterial den thermischen Anforderungen beim Färben, Waschen, Heißfixieren, Bügeln etc. widerstehen zu lassen. Nachteilig bei diesem Verfahren ist jedoch die Verwendung eines aus toxikologischen Gründen kritischen Diisocyanats. Weiterhin weisen die so hergestellten elastischen Fäden eine zu hohe Restdehnung auf.

In der EP 0256470 A2 werden Poly(urethan)-Elastomere beschrieben, die sich zu elastischen Filamenten mit hoher Heißreißzeit, - diese dient als Maß für den Widerstand gegen thermische Verformung im gespannten Zustand - verspinnen lassen. Die Fäden sind durch die Verwendung flüssig-kristalliner Kettenverlängerungsmittel, die in den Hartsegmenten mesogene Strukturen ausbilden können, gekennzeichnet. Derartige Kettenverlänger sind jedoch teuer und aufwendig herzustellen und kommerziell nicht verfügbar. Zudem besitzen die Fäden ebenfalls eine deutlich zu hohe Restdehnung.

Eine weitere Möglichkeit zur Verstärkung der Wechselwirkungen zwischen den Makromolekülen von Poly(urethan)en ist die Einführung chemischer Vernetzungspunkte insbesondere zwischen den Hartsegmenten. In der Technik geschieht dies üblicherweise durch Einsatz eines auf die Menge der Hydroxylgruppen des Makrodiols und des Kettenverlängerers bezogenen Überschusses di- oder höherfunktioneller Polyisocyanate bei der Synthese bzw. der Verarbeitung des Poly(urethan)s und anschließender thermischer Nachbehandlung. Abhängig von der Art der verwendeten Kettenverlängerer werden dabei chemische Vernetzungen über Allophanat-, Biuret-, Urethan- bzw. Harnstoffbindungen erzeugt.

So können laut DE-OS 1669402 PU-Fäden mit hohem Widerstand gegen thermische Verformung und plastisches Fließen durch Schmelzspinnen eines Gemischs aus linearen, OH-Endgruppen enthaltenden thermoplastischen Poly(urethan)en und blockierten Trisisocyanaten des 2,4-Toluoldiisocyanats, wie dem Isocyanurat oder dem Reaktionsprodukt mit Trimethylolpropan, hergestellt werden. Das letztgenannte Produkt wird zum gleichen Zweck auch in der GB-PS 1144233 genannt. Besonders nachteilig ist bei diesem Verfahren jedoch das Freiwerden des Blockierungsmittels bei Austritt aus der Spinndüse, wodurch die Verarbeitung der Fäden erschwert und das Verfahren deutlich aufwendiger wird. Weiterhin entspricht die angegebene Festigkeit der Fäden nicht mehr den heutigen Qualitätsansprüchen.

Bei einem zum Beispiel in der JP 80-188089 und der EP 0454160 A2 beschriebenen Verfahren wird die durch Aufschmelzen des Granulats eines thermoplastischen Poly(urethan)s erhaltene Schmelze kurz vor der Verspinnung mit einem Polyisocyanat versetzt, wodurch in den Fäden überwiegend vernetzende Allophanatstrukturen erzeugt werden. Als derartige Polyisocyanate werden genannt Diisocyanate, Trimere von Diisocyanaten, Reaktionsprodukte von Trimethylolpropan mit Diisocyanaten, Carbodiimid-modifizierte Isocyanate; bevorzugt wird ein Isocyanat-Präpolymer eingesetzt. Dieses Verfahren vermeidet ein Blockierungsmittel. Das Wiederaufschmelzen eines Granulats ist jedoch wenig wirtschaftlich. Zudem führt die thermische Belastung beim Aufschmelzen zu nicht reproduzierbaren Abbaureaktionen innerhalb der Polymerketten des Poly(urethan)s, die sich auf die textilen Eigenschaften der Fäden nachteilig auswirken können. Weiterhin spalten Allophanatbindungen thermisch leicht zurück, so daß die Fäden nur eine geringe thermische Stabilität besitzen.

Das beispielhaft in der JP 51-26321 beschriebene und in der EP 0397121 A2 als bevorzugt genannte Verfahren umgeht den Nachteil eines Zweistufen-Prozesses durch direkte Verspinnung der bei der Synthese des thermoplastischen Poly(urethan)s mittels Masse-Polyaddition entstehenden Schmelze. Dabei wird bereits bei der PU-Synthese ein Überschuß des verwendeten Diisocyanats eingesetzt, wodurch ebenfalls überwiegend vernetzende Allophanatstrukturen erzeugt werden. Es wird jedoch darauf hingewiesen, daß zur Erzeugung besonders thermostabiler elastischer Fäden eine hohe Vernetzungsdichte und damit ein hoher Isocyanatüberschuß benötigt wird, was sich jedoch nachteilig auf die Verspinnbarkeit der Schmelze auswirkt. Dieses Problem wird auch in der DE-OS 4115508 AI für die Verarbeitung von thermoplastischen Poly(urethan)en betont.

Aufgrund dieser nachteiligen Auswirkungen eines hohen Isocyanatüberschusses und damit einer hohen Vernetzungsdichte auf die Verspinnbarkeit von Poly(urethan)-Schmelzen, konnten bisher noch keine Fäden hergestellt werden, die neben einer mit Poly(urethanharnstoff)-Elastanen vergleichbaren Verarbeitungs- und mechanisch-elastischen Qualität auch eine vergleichbare thermische Stabilität aufweisen, wie sie in hohen Werten der Heat Distortion Temperature (HDT) und ganz besonders der Heißreißzeit zum Ausdruck kommt.

Es war die der Erfindung zugrundeliegende Aufgabe, ein Verfahren zu Herstellung von elastischen Poly(urethan)-Filamenten zur Verfügung zu stellen, welches insbesondere folgende Vorteile aufweisen soll:

1. Die Herstellung des Poly(urethan)s und die Verspinnung sollte ohne den Zusatz eines Lösemittels und damit kostengünstig erfolgen.

2. Die Freisetzung von Spaltprodukten beim Spinnen und Nachbehandeln, insbesondere bei thermischer Nachbehandlung, sollte vermieden werden.

3. Die Herstellung des Poly(urethan)s und die Verspinnung sollte kontinuierlich erfolgen und damit Eigenschaftsnachteile bei den Fäden durch den thermischen Abbau des Poly(urethan)s beim Aufschmelzen eines Granulats vermeiden.

4. Das Verfahren sollte zu elastischen Filamenten mit verbesserter thermischer Stabilität, insbesondere solchen mit einer Heißreißzeit von mindestens 10 s, und damit gezielter Thermofixierbarkeit bei einer Temperatur von 195°C führen.

Diese Aufgabe konnte mit der Bereitstellung des nachstehend näher beschriebenen erfindungsgemäßen Verfahren gelöst werden.

Es wurde überraschend gefunden, daß sich Elastanfäden mit hoher Heißreißzeit und damit hoher Stabilität gegen thermische Verformung herstellen lassen, wenn man bei der lösemittelfreien Synthese des Poly(urethan)s neben den an sich bekannten difunktionellen Polyisocyanaten mindestens ein höherfunktionelles Polyisocyanat, das Isocyanuratgruppen enthält, verwendet und die PU-Reaktionsschmelze ohne weitere Zwischenschritte direkt verspinnt.

Ebenfalls überraschend war die Tatsache, daß durch die erfindungsgemäße Verwendung des höherfunktionellen Polyisocyanats die Verarbeitungseigenschaften, insbesondere die Verspinnbarkeit der PU-Reaktionsschmelze, keinerlei Beeinträchtigung erfahren.

Gegenstand der Erfindung ist ein Verfahren zur Herstellung von Elastanfäden durch Umsetzung von

a) Makrodiolen, vorzugsweise linearen Makrodiolen, mit einem Molekulargewicht von 1000 bis 8000 mit

b) mindestens einem Diisocyanat,

c) mindestens einem Polyisocyanat mit einer mittleren Funktionalität größer als 2,

d) Diolen mit einem Molekulargewicht bis 400 als Kettenverlängerungsmittel,

e) ggf. Katalysatoren und

f) ggf. weiteren Hilfs- und Zusatzstoffen,

Verspinnen der daraus erhaltenen Polyurethane zu Fäden und Nachbehandeln der erhaltenen Fäden, dadurch gekennzeichnet, daß bei der Poly(urethan)-Synthese eine Mischung aus der Komponente (b) und der Komponente (c) eingesetzt wird, wobei die Komponente (c) aus einem Isocyanuratgruppen aufweisenden Polyisocyanat mit einer mittleren Funktionalität größer als 2 besteht, die beiden Komponenten (b) und (c) in einem solchen Mengenverhältnis eingesetzt werden, daß sich die Zahl der Isocyanatäquivalente der Komponente (b) zur Zahl der Isocyanatäquivalente der Komponente (c) wie 99,5:0,5 bis 80:20 verhält, die Polymer-Synthese kontinuierlich erfolgt, die entstehende Reaktionsschmelze ohne weitere Zwischenschritte direkt versponnen und die so erhaltenen Elastanfäden thermisch nachbehandelt werden.

Die Umsetzung der Komponenten a), b), c) und d) wird nach einem Einstufenverfahren oder nach dem Präpolymerverfahren durchgeführt und die Summe der Komponenten b) + c) + d) im elastischen Faden beträgt 5 bis 30 Gew.-%, bezogen auf die Summe der Komponenten a) + b) + c) + d).

Die Angaben des Molekulargewichtes beziehen sich hier, soweit nicht ausdrücklich anders angegeben, auf das Zahlenmittel $M_n$ des Molekulargewichts.

Bei den Makrodiolen (a) handelt es sich um die zur Herstellung von thermoplastischen Poly(urethan)en bzw. elastischen Filamenten aus Poly(urethan)en und Poly(urethanharnstoff)en bekannten Verbindungen, wie sie z.B. in der DE-A 2832352 oder in der US-A 3719708 aufgeführt werden. Beispielsweise seien genannt: Polyesterdiole, Polyetherdiole, Polyacetaldiole, Polycarbonatdiole und andere Dihydroxylverbindungen mit einem Molekulargewicht von 1000 bis 8000, bevorzugt von 1000 bis 6000, besonders bevorzugt von 1500 bis 4000. Besonders bevorzugt werden Polyesterdiole und Polyetherdiole oder ihre Mischungen eingesetzt.

Als Polyesterdiole sind z.B. Dicarbonsäurepolyester aliphatischer Dicarbonsäuren geeignet, die sowohl mehrere Diole wie auch mehrere Dicarbonsäuren oder Hydroxycarbonsäuren enthalten können. Besonders geeignet sind Mischpolyester aus längerkettigen, bevorzugt sechs oder mehr Kohlenstoffatome enthaltenden Dicarbonsäuren, wie Sebazinsäure, Azelainsäure und vorzugsweise Adipinsäure und 2 bis 4 verschiedenen, vorzugsweise längerkettigen, besonders vier oder mehr C-Atome enthaltenden Diolen. Besonders geeignete Diole für diese Polyester sind 1,6-Hexandiol, 1,4-Butandiol, 2,2-Dimethyl-1,3-propandiol und 3-Methyl-1,5-pentandiol. Auch Lactonpolyesterdiole oder Mischpolyesterdiole auf Basis ε-Caprolacton und Methylvalerolacton sind als Verbindungen a) geeignet.

Als langkettige Polyetherdiole eignen sich besonders Polytetramethylenoxiddiole oder ihre Copolyether mit anderen etherbildenden Verbindungen wie Ethylenoxid oder Propylenoxid. Es können auch Mischungen aus den genannten Verbindungen eingesetzt werden.

Bei der Komponente (b) handelt es sich um die zur Herstellung von PU-Elastomeren gängigen aromatischen Diisocyanate, wie sie z.B. im Kunststoff-Handbuch, Band VII, herausgegeben von Oertel, Carl-Hanser-Verlag, München, 2. Auflage, 1983, auf den Seiten 63 bis 74 beschrieben sind. Sie werden ggf. in Kombination (mit geringeren Anteilen) von (cyclo)aliphatischen Diisocyanaten, ggf. aber auch die (cyclo)aliphatischen Diisocyanate allein verwendet. Besonders bevorzugte Fäden werden mit nachstehenden Diisocyanaten erhalten:

Mit 2,4-Toluoldiisocyanat sowie entsprechenden Isomerengemischen an 2,4/2,6-Diisocyanat, und besonders mit 4,4'-Diphenylmethandiisocyanat bzw. entsprechenden Isomerengemischen mit untergeordneten, technisch bedingten Mengen an 2,4'-und/oder 2,2'-Isomeren. Besonders bevorzugt wird reines 4,4'-Diphenylmethandiisocyanat verwendet. Selbstverständlich ist es möglich, Mischungen von aromatischen Diisocyanaten zu verwenden. Als Mischungskomponenten oder Einzelkomponenten sind weiterhin beispielsweise nachstehende (cyclo)aliphatische Diisocyanate geeignet, insbesondere 1,6-Hexamethylendiisocyanat, 1,8-Octamethylendiisocyanat, 2/3-Methylhexamethylendiisocyanat-1,6 oder 2,4-Diisocyanato-1-methylcyclohexan sowie die 4,4'-Dicyclohexylalkyliden-, 4,4'-Dicyclohexyletherdiisocyanate in ihren verschiedenen Stereoisomeren oder Stereoisomergemischen.

Als Komponente (c) sind beispielsweise die an sich bekannten isocyanuratmodifizierten Polyisocyanate einsetzbar wie sie z.B. in HOUBEN-WEYL, "Methoden der organischen Chemie", Band E20, "Makromolekulare Stoffe", Herausgeber H. Bartl, J. Falbe, Georg Thieme Verlag, Stuttgart, New York, 1987 auf den Seiten 1739 bis 1748 beschrieben sind. Vorzugsweise werden die Oligomerisierungsprodukte der bei der Beschreibung der Komponente (b) genannten aromatischen und (cyclo)aliphatischen Diisocyanate verwendet. Besonders bevorzugt werden das technisch gut verfügbare Oligomere des 2,4-Toluoldiisocyanat sowie der entsprechenden Isomerengemische an 2,4/2,6-Diisocyanat und insbesondere Oligomere des 4,4'-Diphenylmethandiisocyanat bzw. entsprechender Isomerengemische mit untergeordneten Mengen an 2,4'- und/oder 2,2'-Isomeren, die allein oder als Gemisch eingesetzt werden können. Als weitere Mischungskomponenten oder Einzelkomponenten sind beispielsweise die Oligomeren der bei (b) genannten (cyclo) aliphatischen Diisocyanate geeignet, wobei die Oligomere des 1,6-Hexamethylendiisocyanat besonders bevorzugt werden.

Weiterhin können Oxazolidinon- und Isocyanuratgruppen aufweisende Zwischenprodukte eingesetzt werden, die gemäß der EP 0272563 A2 und der US-PS 4788224 durch Umsetzung mindestens eines organischen Polyisocyanats mit mindestens einer, mindestens zwei Epoxidgruppen aufweisenden organischen Verbindung in einer solchen Menge, die einem Äquivalentverhältnis von Isocyanatgruppen zu Epoxidgruppen von 1,2:1 bis 500:1 entspricht, mit Hilfe eines tertiären Amins als Katalysator entstehen, wobei die Reaktion bei einer Umsetzung von maximal 65% der im Ausgangsgemisch vorliegenden Isocyanatgruppen durch Zusatz einer der Aminmenge mindestens äquivalenten Menge eines alkylierend wirkenden Sulfonsäurealkylesters von Methyljodid oder von Dimethylsulfat abgebrochen wird. Dabei werden als organisches Polyisocyanat bevorzugt die bei der Beschreibung der Komponente (b) genannten Diisocyanate, vorzugsweise das 2,4-Toluoldiisocyanat sowie entsprechende Isomerengemische an 2,4/2,6-Diisocyanat, besonders bevorzugt aber das 4,4'-Diphenylmethandiisocyanat verwendet. Als Polyepoxidverbindungen werden vorzugsweise Polyglycidylether mehrwertiger Phenole, insbesondere von Bisphenol A eingesetzt.

Bei der Komponente (d) handelt es sich um Diolverbindungen mit einem Molekulargewicht bis zu 400, wie sie bei der Herstellung thermoplastischer Poly(urethan)e üblich sind. Sie können allein oder als Mischung zugesetzt werden. Beispiele solcher Diole sind 1,2-Ethandiol, 1,2- und 1,3-Propandiol, 2,2-Dimethyl-1,3-propandiol, 1,6-Hexandiol, 3-Methyl-1,5-pentandiol, 1,4-Cyclohexandiol, 1,4-Bis-(2-hydroxyethoxybenzol) und Bis-(2-hydroxyethoxy)terephthalat. Bevorzugt werden 1,4-Bis-(2-hydroxyethoxybenzol) und 1,6-Hexandiol, besonders bevorzugt 1,4-Butandiol als Kettenverlängerer verwendet. In Anteilen bis zu 5 Gew.-%, bezogen auf die Komponente (d), können ggf. neben den Diolen auch höherfunktionelle Polyole, wie z.B. Trimethylolpropan, Glycerin, 1,2,6-Hexantriol, Trimethylolethan und Pentaerythrit mitverwendet werden.

Es ist weiterhin möglich, ggf. auch aliphatische Amine, wie z.B. Ethylendiamin, 1,4-Tetramethylendiamin, Hexamethylendiamin, Hydrazin und substituierte Hydrazine und Aminoalkohole, wie z.B. Ethanolamin, Diethanolamin und 3-Aminopropanol als Co-Kettenverlängerer in Anteilen bis zu 10 Gew.-% der Gesamtmenge an Komponente (d) einzusetzen.

Im Einklang mit dem erfindungsgemäßen Verfahren können ggf. außer den genannten Kettenverlängerern weitere Verbindungen mit gegenüber Isocyanaten monofunktionellen Gruppen als sogenannte Kettenabbrecher mitverwendet werden. Hierzu gehören z.B. Monoalkohole wie Butanol, 2-Ethylhexanol, Octanol, Dodecanol, die verschiedenen Amylalkohole, Cyclohexanol und Ethylenglykolmonomethylether sowie Monoamine, wie z.B. Diethylamin, Butyl- und Dibutylamin, Octylamin, Stearylamin, Methylstearylamin, Pyrrolidin, Piperidin und Cyclohexylamin.

Geeignete Katalysatoren (e), welche insbesondere die Reaktion zwischen den NCO-Gruppen der Polyisocyanate (b) und (c) und den Hydroxylgruppen der Aufbaukomponenten (a) und (d) beschleunigen, sind die nach dem Stand der Technik bekannten und üblichen tertiären Amine, wie z.B. Triethylamin, N,N-Dimethylcyclohexylamin, N-Methylmorpholin, N,N'-Dimethylpiperazin, 1,4-Diazabicyclo[2,2,2]octan und ähnliche sowie insbesondere organische Metallverbindungen wie Titansäureester, z.B. Dibutyltitanbis(acetylacetonat), Eisenverbindungen, Zinnverbindungen, z.B. Zinn(II)acetat, Zinn(II)octoat und Zinn(II)laurat oder die Zinndialkylsalze aliphatischer Carbonsäuren wie Dibutylzinndilaurat, Dibutylzinndiacetat, Dioctylzinndiacetat oder ähnliche. Die Katalysatoren werden üblicherweise in Mengen von 0,001 Gew.% bis 0,1 Gew.% pro 100 Gew.-Teilen der Mischung aus Polyhydroxylverbindungen (a) und Diolen (d) eingesetzt. Bei einer besonders bevorzugten Ausführung des erfindungsgemäßen Verfahrens wird auf die Zugabe eines Katalysators verzichtet.

Die an sich bekannten, verschiedenen Zwecken dienenden Hilfs- und Zusatzstoffe (f) können sowohl den Rohstoffen wie auch der zu verspinnenden Schmelze in wirksamen Mengen zugesetzt werden. Genannt seien z.B. Antioxidatien, Lichtschutzmittel, UV-Absorber, Schönungsfarbstoffe, Pigmente, Färbeadditive, Antistatika, adhäsiv wirksame Zusätze wie Magnesium-, Calcium-, Lithium-, Zink- und Aluminiumsalze langkettiger Carbonsäuren wie -stearate, -palmitate oder Dimerfettsäuren oder beliebige Gemische dieser Salze, Stearinsäuren, Stearylalkohol, Stearinsäureester und -amide sowie Fettsäureester des Pentaerythrits oder auch Zusätze von feinteiligen Zinkoxiden, welche bis zu 15 Gew.% andere Oxide, z.B. Magnesiumoxid oder Calciumoxid oder Carbonate, z.B. Ca- oder Magnesiumcarbonate, enthalten können. Durch derartige Zinkoxide mit Erdalkalioxiden oder - carbonaten als Zusätze kann eine hervorragende Chlorbeständigkeit von Ether- wie auch Polyester-Elastomerfäden gegen Chlorwasser (Waschmittel/Schwimmbäder/Bleichmittel) erzielt werden, ohne das man eine hohe Reinheitsforderung, z.B. im Zinkoxid- oder Spuren-Schwefel-Gehalt, einhalten müßte.

Zur Erzielung ausreichender mechanischer Eigenschaften der nach dem erfindungsgemäßen Verfahren hergestellten elastischen Fäden, wie z.B. hohe Dehnbarkeit, geringe Restdehnung und gutes Rückstellverhalten, werden die Komponenten (a), (b), (c) und (d) bevorzugt in einem solchen Mengenverhältnis umgesetzt, daß die Summe der Komponenten (b) und (c) und (d) in den elastischen Fäden 15 bis 30 Gew.%, vorzugsweise 18 bis 25 Gew.% bezogen auf die Summe der Komponenten (a) und (b) und (c) und (d) ausmacht.

Zusätzlich liegt das Verhältnis aus der Summe der Isocyanatäquivalente der Komponenten (b) und (c) und der Summe der Äquivalente an zerewitinoffaktiven Wasserstoffatomen der Komponenten (a) und (d) in den nach dem erfindungsgemäßen Verfahren hergestellten elastischen Fäden bezogen auf die Ausgangsstoffe vor der Umsetzung bevorzugt zwischen 1,00 und 1,15, besonders bevorzugt zwischen 1,03 und 1,10.

Weiterhin ist es nach dem erfindungsgemäßen Verfahren notwendig, daß sich die Zahl der Isocyanatäquivalente der Komponente (b) zur Zahl der Isocyanatäquivalente der Komponente (c) wie 99,5:0,5 bis 80:20, vorzugsweise wie 98:2 bis 90:10 verhält. Ein Überschreiten des Verhältnisses von 99,5:0,5 führt zu Fäden mit unzureichenden thermischen Eigenschaften, insbesondere wird keine genügend hohe Heißreißzeit erhalten. Das Unterschreiten des Verhältnisses von 80:20 verschlechtert hingegen die Verspinnbarkeit der Poly(urethan)-Schmelze markant.

Zur Durchführung des erfindungsgemäßen Verfahrens werden die Rohstoffe (a) bis (f) ohne Zusatz von Lösemittel kontinuierlich, z.B. unter Verwendung von Mehrwellenschneckenmaschinen, zu einem Poly(urethan) umgesetzt. Durch den Einsatz der Komponente (c) bei der Herstellung des Poly(urethan)s werden die vernetzenden, Isocyanuratgruppen enthaltenden Polyisocyanate weitgehend über gegenüber Allophanatbindungen thermisch stabilere Urethanbindungen eingebaut. Die Reaktion kann dabei sowohl nach dem bekannten One shot-Verfahren, d.h. durch Zusammengeben der Reaktionskomponenten und anschließendes Ausreagieren zum Polymer oder nach dem Präpolymer-Verfahren erfolgen. Nach dem Präpolymer-Verfahren wird bevorzugt in mehreren Schritten

i. diskontinuierlich oder kontinuierlich aus zumindest Teilen der Komponente (a) und zumindest Teilen der Komponenten (b) und (c) ein Vorpolymer hergestellt wird, wobei sich im Vorpolymer die Summe der Isocyanatäquivalente der Komponenten (b) und (c) zur Zahl der Hydroxyläquivalente der Komponente (a) wie 1,05 : 1 bis 10 : 1, vorzugsweise wie 1,1 : 1 bis 6 : 1 und besonders bevorzugt wie 1,5 : 1 bis 4 : 1 verhält und

ii. dieses Vorpolymer zusammen mit den restlichen Ausgangsstoffen und den verbliebenen Anteilen der Komponenten (a), (b) und (c) zum Poly(urethan) umgesetzt.

Das Präpolymer-Verfahren besitzt die Vorteile einer konstanteren Reaktionsführung und eines besseren Verarbeitungsverhalten der Reaktionsschmelze bei der Verspinnung und wird daher bevorzugt eingesetzt.

Die Hilfs- und Zusatzstoffe können im erfindungsgemäßen Verfahren einem oder auch mehreren der Ausgangsstoffe zugemischt werden. Sie können aber auch an beliebiger Stelle der Polymersynthese einzeln oder im Gemisch der Reaktionsmasse zugesetzt werden. Additive, wie z.B. die üblichen Spinnzusätze und Stabilisatoren werden der Polymerschmelze bevorzugt unmittelbar vor der Verspinnung zugemischt.

Die aus der Polymersynthese erhaltene Reaktionsschmelze wird im erfindungsgemäßen Verfahren kontinuierlich, d.h. ohne Abkühl-, Granulier- und erneute Aufschmelzstufe, mit Hilfe einer Spinnpumpe durch Düsen gepreßt, die Filamente abgekühlt, ggf. verstreckt und aufgewickelt. Die Fäden werden anschließend einer thermischen Nachbehandlung unterzogen. Während dieser Temperung stellen sich die gewünschten mechanischen und insbesondere thermischen Eigenschaften der Fäden ein.

In einer bevorzugten Variante des erfindungsgemäßen Verfahrens werden in einer ersten Stufe die Gesamtmenge oder zumindest Teile der Komponenten (a), (b) und (c) bei Temperaturen zwischen 70°C und 150°C, vorzugsweise zwischen 80°C und 120°C zu einem Isocyanat-Präpolymeren umgesetzt und ggf. anschließend mit den restlichen Komponenten (a), (b) und (c) vermischt.

Die Kettenverlängerung erfolgt dann z.B. in einer ggf. mit Knetelementen bestückten Mehrwellenschneckenmaschine mit selbstreinigender Schneckengeometrie bei einer Temperatur von 80°C bis 260°C. Sinnvollerweise setzt man Schneckenmaschinen ein, die aus mehreren getrennt heiz- bzw. kühlbaren Gehäuseteilen aufgebaut und nach Einzugszone (Zudosierung der Reaktionskomponenten), Reaktionszonen und Extrusionszone gegliedert sind. Bei der Durchführung des bevorzugten erfindungsgemäßen Verfahrens werden das Präpolmer aus der ersten Stufe und die restlichen Komponenten entweder einzeln oder teilweise vermischt an der gleichen Stelle (bevorzugt in das erste Gehäuse) oder an verschiedenen Stellen kontinuierlich in die Schneckenmaschine eingespeist. Bevorzugt wird das Präpolymer ggf. vorvermischt mit weiteren Komponenten und die Komponente (d) in das erste Gehäuse zudosiert. Hilfs- und Zusatzstoffe , wie z.B. die üblichen Spinnzusätze und Stabilisatoren werden vorzugsweise erst nach der Reaktionszone zudosiert. In der Einzugszone liegt die Temperatur bei 70°C bis 150°C, vorzugsweise bei 90°C bis 120°C, in der Reaktionszone beträgt sie von 100°C bis 260°C, vorzugsweise von 150°C bis 240°C, und in der Extrusi-

EP 0 679 738 B1

onszone von 150°C bis 250°C, bevorzugt von 190°C bis 220°C. Die Verweilzeit der Schmelze in der Schneckenmaschine beträgt in der Regel insbesondere 0,5 bis 20 Minuten, bevorzugt 1 Minute bis 10 Minuten, besonders bevorzugt bis 5 Minuten.

Die Reaktionsschmelze wird anschließend kontinuierlich über eine am Ende der Schnecke angebrachte Spinnpumpe zu den Spinndüsen gefördert und insbesondere bei einer Temperatur der Spinndüse von 180°C bis 240°C, vorzugsweise von 190°C bis 225°C mit einer Geschwindigkeit der Fäden von 100 m/min bis 800 m/min, bevorzugt 200 m/min bis 600 m/min abgezogen. Die entstehenden Filamente werden abgekühlt, z.B. durch Anblasung mit Luft und, ggf. nach einer kontinuierlichen Verstreckung, bevorzugt einer Kaltverstreckung bei Raumtemperatur mit einem Streckgrad von 1,1 bis 4, vorzugsweise von 1,1 bis 2, mit anschließender Relaxation und ggf. Aufbringen einer der für Elastane üblichen Präparationen, aufgewickelt. Das erfindungsgemäße Verfahren erlaubt es Monofile und Multifile herzustellen, bevorzugt werden Monofilamente ersponnen.

Die Fäden werden anschließend einer thermischen Nachbehandlung, insbesondere bei einer Temperatur von 60°C bis 120°C, bevorzugt von 80°C bis 100°C, für insbesondere 1 Stunde bis 96 Stunden, vorzugsweise für 16 Stunden bis 48 Stunden, unterworfen. Diese Temperung kann sowohl im Vakuum wie auch in Luft oder inerten Gasen erfolgen, bevorzugt wird in Luft getempert.

Die nach dem erfindungsgemäßen Verfahren hergestellten elastischen Fäden, die auch Gegenstand der Erfindung sind, zeichnen sich durch eine geringe Restdehnung von 5% bis 20%, besonders von 5% bis 15%, bei gleichzeitig hoher Dehnung von 350% bis 550%, vorzugsweise von 450% bis 550%, aus.

Insbesondere besitzen die nach dem erfindungsgemäßen Verfahren hergestellten elastischen Filamente eine hohe Stabilität gegen thermische Belastung und plastisches Fließen, wie sie in einem HDT (Heat Distortion Temperature)-Wert von über 185°C und ganz besonders in einer Heißreißzeit von mindestens 10 s, bevorzugt von mindestens 15 s, zum Ausdruck kommt.

Die elastischen Filamente können hervorragend allein oder in Kombinationsgarnen zusammen mit anderen Filamenten aus z.B. Polyamid, Wolle, Baumwolle und Polyester beispielsweise mittels Kettwirken, Rund- und Flachstricken verarbeitet werden. Neben dem Einsatz in der Beinbekleidung sind die nach dem erfindungsgemäßen Verfahren hergestellten elastischen Fäden aufgrund der hohen thermischen Stabilität ganz besonders für die Anwendung in Gebieten, die eine gezielte Thermofixierbarkeit erfordern, geeignet, wie z.B. Wäsche, Mieder, Sportbekleidung, Oberbekleidung und Bezugsstoffe.

Weiterer Gegenstand der Erfindung ist die Verwendung der nach dem erfindungsgemäßen Verfahren erhaltenen Elastanfäden zur Herstellung textiler Flächengebilde.

Meßmethoden:

Die in den Beispielen erwähnten Meßgrößen wurden wie folgt bestimmt. Die inherente Viskosität ($\eta_i$) der Elastomeren wurde in verdünnter Lösung von 0,5 g/100 ml Lösemittel (99 Gew.% Dimethylacetamid, 1 Gew.% Di-n-butylarnin) bei 30°C durch Bestimmung der relativen Viskosität $\eta_r$ gegenüber dem reinen Lösemittel bestimmt und nach den Formeln

$$\eta_r = \frac{t_1}{t_0} \qquad \eta_i = \frac{\ln \eta_r}{c}$$

mit

$t_1$: Durchlaufzeit (s) der Polymerlösung
$t_o$: Durchlaufzeit (s) des reinen Lösemittels
c: Konzentration der Elastomerenlösung (g/dl)

umgerechnet.

Die Feinheitsfestigkeit wurde in Anlehnung an DIN 53815 bestimmt (cN/dtex). Die Messung der Höchstzugkraftdehnung (in %) erfolgte ebenfalls nach DIN 53815. Der Modul bei 100% bzw. 300% erstmaliger Dehnung wurde bei einer Dehnungsgeschwindigkeit von $4 \times 10^{-3}$ m/s in cN/dtex bestimmt. Die Restdehnung wurde nach fünfmaliger Ausdehnung auf 300% und nach einer Erholungszeit von 60 s bestimmt. Die Messung der Heat Distortion Temperature (HDT) und Heißreißzeit (HRZ) erfolgte nach Methoden, die in der Zeitschrift Chemiefaser/Textilindustrie, Januar 1978, Heft 1/78, 28./80. Jahrgang auf den Seiten 44 bis 49 beschrieben sind. Entsprechende Angaben finden sich auch in der Schrift DE-OS 2542500.

In den nachfolgenden Beispielen beziehen sich alle Prozentangaben, soweit nicht anders angegeben, auf Gewichtsprozente.

**Vergleichsversuch 1**

a) 4935 Gew.-Teile (19,7 mol) 4,4'-Diphenylmethandiisocyanat werden in einem Rührkessel bei 80°C mit 15000 Gew.-Teilen (7,4 mol) Poly(hexandiol-co-neopentylglykoladipat)diol (OH-Zahl: 55,0) umgesetzt. Nach einer Reaktionszeit von 60 min beträgt der Isocyanatgehalt 5,17%. Das so erhaltene zähflüssige Präpolymer wird ohne Abkühlung in der nächsten Stufe eingesetzt.

b) Je Zeiteinheit werden 100 Gew.-Teile des Präpolymers aus a) und in einem getrennten Strom 5,22 Gew.-Teile (0,058 mol) 1,4-Butandiol in das erste Gehäuse einer üblichen Zweiwellenschneckenmaschine eindosiert und bei Temperaturen zwischen 120°C und 240°C zu einem Poly(urethan) umgesetzt. Am Ende der Schnecke wird die Schmelze bei 210°C mittels einer Spinnpumpe einer auf 205°C geheizten Einloch-Düse zugeführt, mit einer Geschwindigkeit von 100 m/min unter Anblasung mit Luft abgezogen, kontinuierlich um den Faktor 2 verstreckt und mit einer Geschwindigkeit von 155 m/min aufgewickelt. Der Spinnverzug beträgt 489. Anschließend wird das Filament bei 90°C für 48 h getempert.

Die textilen Daten der Filamente sind in der Tabelle aufgeführt. Wie klar zu erkennen ist, werden keine Fäden mit hohen Heißreißzeiten erhalten.

Herstellung eines "EPIC"-Polyisocyanats (EPI)

Das Isocyanurat- und Oxazolidinongruppen enthaltende Polyisocyanat wurde nach dem in der EP 0272563 A2 beschriebenen Verfahren hergestellt.

Dazu werden 1140 Gew.Teile 4,4'-Diphenylmethandiisocyanat (NCO-Gehalt = 33,6%) bei 50°C mit 60 Gew.-Teilen des Diglycidylethers von Bisphenol A (Epoxidzahl = 0,585) und 0,1 ml (0,64 mmol) Dimethylbenzylamin gemischt und anschließend innerhalb von 2,5 Stunden auf 110°C aufgeheizt. Dem Ansatz wird eine Probe entnommen. Die Probe ist bei Raumtemperatur ein festes, klebriges Harz und besitzt einen NCO-Gehalt von 26,0% NCO. Durch Zugabe von 1,2 g Toluolsulfonsäuremethylester wird die Reaktion abgebrochen. Der Ansatz wird für weitere 30 min auf 120°C erhitzt und dann mit Eiswasser abgekühlt. Der NCO-Gehalt einer erneuten Probe beträgt 24,7% NCO. Das entspricht einer mittleren NCO-Funktionalität von 2,22 NCO-Äquivalente/mol.

**Beispiel 1**

4813 Gew.-Teile (19,2 mol) 4,4'-Diphenylmethandiisocyanat werden bei 55°C mit 192,8 Gew.-Teile (0,5 mol) des Polyisocyanats EPI, entsprechend einem NCO-Äquivalentverhältnis von 97:3, gemischt und in der im Vergleichsversuch Ia) beschriebenen Weise mit 15000 Gew.-Teilen (7,5 mol) Poly(hexandiol-co-neopentylglykoladipat)diol (OH-Zahl: 56,1) zu einem Präpolymer mit einem Isocyanatgehalt von 5,12% umgesetzt.

100 Gew.-Teile des Vorprodukts werden mit 5,17 Gew.-Teilen (0,057 mol) 1,4-Butandiol in der im Vergleichsversuch 1b) beschriebenen Weise kettenverlängert und die entstehende Poly(urethan)-Schmelze versponnen (Düsentemperatur 210°C). Die textilen Daten der Filamente sind in der Tabelle aufgeführt.

**Beispiel 2**

4703 Gew.-Teile (18,8 mol) 4,4'-Diphenylmethandiisocyanat und 320,4 Gew.-Teile (0,9 mol) des Polyisocyanats EPI, entsprechend einem NCO-Äquivalentverhältnis von 95:5, werden in der im Vergleichsversuch Ia) beschriebenen Weise mit 15000 Gew.-Teilen (7,5 mol) Poly(hexandiol-co-neopentylglykoladipat)diol (OH-Zahl: 56,1) zu einem Präpolymer mit einem Isocyanatgehalt von 5,10% umgesetzt.

100 Gew.-Teile des Vorprodukts werden mit 5,15 Gew.-Teilen (0,057 mol) 1,4-Butandiol in der im Vergleichsversuch 1b) beschriebenen Weise kettenverlängert und die entstehende Poly(urethan)-Schmelze versponnen (Düsentemperatur 215°C). Die textilen Daten der Filamente sind in der Tabelle aufgeführt.

**Beispiel 3**

4553 Gew.-Teile (18,2 mol) 4,4'-Diphenylmethandiisocyanat und 444,5 Gew.-Teilen (1,2 mol) des Polyisocyanats EPI, entsprechend einem NCO-Äquivalentverhältnis von 93:7, werden in der im Vergleichsversuch Ia) beschriebenen Weise mit 15000 Gew.-Teilen (7,5 mol) Poly(hexandiol-co-neopentylglykoladipat)diol (OH-Zahl: 55,0) zu einem Präpolymer mit einem Isocyanatgehalt von 4,92% umgesetzt.

100 Gew.-Teile des Vorprodukts werden mit 5 Gew.-Teilen (0,055 mol) 1,4-Butandiol in der im Vergleichsversuch 1b) beschriebenen Weise kettenverlängert und die entstehende Poly(urethan)-Schmelze versponnen (Düsentemperatur 215°C).

Die mechanischen und thermischen Daten des PU-Filaments sind in der Tabelle aufgeführt.

**Beispiel 4**

4884 Gew.-Teile (17,5 mol) 4,4'-Diphenylmethandiisocyanat und 651,2 Gew.-Teile (1,8 mol) des Polyisocyanats EPI, entsprechend einem NCO-Äquivalentverhältnis von 90:10, werden in der im Vergleichsversuch Ia) beschriebenen Weise mit 15000 Gew.-Teilen (7,4 mol) Poly(hexandiol-co-neopentylglykoladipat)diol (OH-Zahl: 55,0) zu einem Präpolymer mit einem Isocyanatgehalt von 4,91% umgesetzt.

100 Gew.-Teile des Vorprodukts werden mit 4,98 Gew.-Teilen (0,055 mol) 1,4-Butandiol in der im Vergleichsversuch 1b) beschriebenen Weise kettenverlängert und die entstehende Poly(urethan)-Schmelze versponnen (Düsentemperatur 225°C). Die textilen Daten der Filamente sind in der Tabelle aufgeführt.

**Vergleichsversuch 2**

660 Gew.-Teile (2,64 mol) 4,4'-Diphenylmethandiisocyanat werden mit 2000 Gew.-Teilen (1 mol) Poly(hexandiol-co-neopentylglykoladipat)diol (OH-Zahl: 55,9) bei 110°C zu einem Präpolymer mit einem Isocyanatgehalt von 5,17% umgesetzt.

In dieses Vorprodukts werden 151,4 Gew.-Teilen (1,68 mol) 1,4-Butandiol eingemischt, wodurch man in der Reaktionsmischung ein Verhältnis von Isocyanat- zu Hydroxylgruppen von etwa 0,985 erhält. Nach dem Mischen wird die Reaktionsmasse in eine 120°C heiße Form gegossen und für 20 min bei 110°C getempert. Nach dem Abkühlen wird das Material zerschnitten und zu einem Granulat gemahlen.

2000 Gew.-Teile dieses Granulats werden mit 42,6 Gew.-Teilen (0,11 mol) eines Polyisocanats EPI mit der mittleren Funktionalität 2,22 und einem Isocyanatgehalt von 24,3% vermischt, so daß nun das Verhältnis von Isocyanat- zu Hydroxylgruppen bezogen auf die Ausgangsstoffe etwa 1,05 beträgt. Die Mischung wird danach mittels einer Einwellenwellenschnecke im geschmolzenen Zustand bei 230°C durch eine Einloch-Düse mit einer Abzugsgeschwindigkeit von 490 m/min versponnen. Das erhaltene Monofil wird kalt um 40% gestreckt und danach unter Spannung für 20 Stunden bei 110°C getempert. Die textilen Daten sind in der Tabelle aufgeführt.

Es ist klar zu erkennen, daß mit diesem Verfahren keine Fäden mit ausreichend hohen Heißreißzeiten erhalten werden.

**Beispiel 5**

4892 Gew.-Teile (19,6 mol) 4,4'-Diphenylmethandiisocyanat und 105,4 Gew.-Teile (0,2 mol) eines Isocyanurats aus 2,4- und 2,6-Toluoldiisocyanat (80:20 Isomerengemisch) mit der mittleren Funktionalität 2,92 und einem Isocyanatgehalt von 23,5%, entsprechend einem NCO-Äquivalentverhältnis von 98,5:1,5, werden in der im Vergleichsversuch 1a) beschriebenen Weise mit 15000 Gew.-Teilen (7,4 mol) Poly(hexandiol-co-neopentylglykoladipat)diol (OH-Zahl: 55,0) zu einem Präpolymer mit einem Isocyanatgehalt von 5,14% umgesetzt.

100 Gew.-Teile des Vorprodukts werden mit 5,21 Gew.-Teilen (0,059 mol) 1,4-Butandiol in der im Vergleichsversuch 1b) beschriebenen Weise kettenverlängert und die entstehende Poly(urethan)-Schmelze versponnen (Düsentemperatur 215°C). Die textilen Daten der Filamente sind in der Tabelle aufgeführt.

**Vergleichsversuch 3**

2000 Gew.-Teile des im Vergleichsversuch 2 hergestellten Granulats werden mit 42,9 Gew.-Teilen (0,08 mol) eines Isocyanurats aus 2,4- und 2,6-Toluoldiisocyanat (80:20 Isomerengemisch) mit der mittleren Funktionalität 2,92 und einem Isocyanatgehalt von 23,5% vermischt, so daß das Verhältnis von Isocyanat- zu Hydroxylgruppen bezogen auf die Ausgangsstoffe etwa 1,05 beträgt. Die Mischung wird danach mittels einer Einwellenwellenschnecke im geschmolzenen Zustand bei 245°C durch eine Einloch-Düse mit einer Abzugsgeschwindigkeit von 490 m/min versponnen. Das erhaltene Monofil wird kalt um 40% gestreckt und danach unter Spannung für 20 Stunden bei 110°C getempert. Die textilen Daten sind in der Tabelle aufgeführt.

Auch bei Verwendung eines reinen Isocyanurats werden mit diesem Verfahren keine Fäden mit ausreichend hohen Heißreißzeiten erhalten.

Tabelle

| Bei-spiel | NCO-Äq. PI (%) | Titer (dtex) | FF (cN/dtex) | FF-ist (%) | HZKD (%) | $\varepsilon_R$ (%) | R100 (cN/dtex) | R300 (cN/dtex) | HDT (°C) | HRZ (s) | $\eta_i$ |
|---|---|---|---|---|---|---|---|---|---|---|---|
| Vgl. 1 | 0 | 71 | 0,88 | 4,71 | 437 | 9 | 0,08 | 0,25 | 181 | 7,4 | 1,67 |
| 1 | 3 | 71 | 0,92 | 5,33 | 479 | 10 | 0,07 | 0,19 | 186 | 15,4 | unl. |
| 2 | 5 | 71 | 0,93 | 5,42 | 481 | 11 | 0,08 | 0,20 | 188 | 16,6 | unl. |
| 3 | 7 | 70 | 0,90 | 5,32 | 490 | 11 | 0,07 | 0,18 | 193 | 20,6 | unl. |
| 4 | 10 | 69 | 0,79 | 4,33 | 450 | 12 | 0,10 | 0,24 | 200 | 25,9 | unl. |
| Vgl. 2 | 5 | 162 | 0,40 | 1,41 | 248 | 7 | 0,18 | - | 187 | 1,9 | unl. |
| 5 | 1,5 | 71 | 0,91 | 4,84 | 431 | 10 | 0,11 | 0,36 | 194 | 15,2 | unl. |
| Vgl. 3 | 5 | 126 | 0,43 | 1,63 | 276 | 10 | 0,14 | - | 192 | < 1 | unl. |

NCO-Äq. PI: proz. Anteil der NCO-Äquivalente des Polyisocyanats am Gesamt-NCO-Gehalt im PU-Faden

FF: Feinheitsfestigkeit

FF-ist: Feinheitsfestigkeit bezogen auf Ausgangstiter

HZKD: Höchstzugkraftdehnung (Bruchdehnung)

$\varepsilon_R$: Restdehnung nach fünfmaliger Dehnung bis 300 %

R100 / R300: Kraftaufnahme bei 100 % bzw. 300 % Dehnung

HDT: Heat Distortion Temperature; Temperatur, bei der der Faden mit definierter Belastung reißt

HRZ: Heißreißzeit; Zeit, bei der der Faden definierter Dehnung bei 193°C reißt

$\eta_i$: $\eta$ inherent;

unl.: Faden ist unlöslich

EP 0 679 738 B1

# EP 0 679 738 B1

**Patentansprüche**

1. Verfahren zur Herstellung von Elastanfäden durch Umsetzung von

   a) Makrodiolen, vorzugsweise linearen Makrodiolen, mit einem Molekulargewicht von 1000 bis 8000 mit

   b) mindestens einem Diisocyanat,

   c) mindestens einem Polyisocyanat mit einer mittleren Funktionalität größer als 2,

   d) Diolen mit einem Molekulargewicht bis 400 als Kettenverlängerungsmittel,

   e) ggf. Katalysatoren und

   f) ggf. weiteren Hilfs- und Zusatzstoffen,

   Verspinnen der daraus erhaltenen Polyurethane zu Fäden und Nachbehandeln der erhaltenen Fäden, dadurch gekennzeichnet, daß bei der Poly(urethan)-Synthese eine Mischung aus der Komponente (b) und der Komponente (c) eingesetzt wird, wobei die Komponente (c) aus einem Isocyanuratgruppen aufweisenden Polyisocyanat mit einer mittleren Funktionalität größer als 2 besteht, die beiden Komponenten (b) und (c) in einem solchen Mengenverhältnis eingesetzt werden, daß sich die Zahl der Isocyanatäquivalente der Komponente (b) zur Zahl der Isocyanatäquivalente der Komponente (c) wie 99,5:0,5 bis 80:20 verhält, die Polymer-Synthese kontinuierlich erfolgt, die entstehende Reaktionsschmelze ohne weitere Zwischenschritte direkt versponnen und die so erhaltenen Elastanfäden thermisch nachbehandelt werden.

2. Verfahren gemäß Anspruch 1 dadurch gekennzeichnet, daß die Umsetzung der Komponenten a), b), c) und d) nach einem Einstufenverfahren oder nach dem Präpolymerverfahren durchgeführt wird und die Summe der Komponenten b) + c) + d) im elastischen Faden 5 bis 30 Gew.-%, bezogen auf die Summe der Komponenten a) + b) + c) + d) beträgt.

3. Verfahren gemäß Anspruch 2 dadurch gekennzeichnet, daß nach dem Präpolymerverfahren in mehreren Schritten zunächst diskontinuierlich oder kontinuierlich aus zumindest Teilen der Komponente (a) und zumindest Teilen der Komponenten (b) und (c) ein Vorpolymer hergestellt wird, wobei sich im Vorpolymer die Summe der Isocyanatäquivalente der Komponenten (b) und (c) zur Zahl der Hydroxyläquivalente der Komponente (a) wie 1,05 1 bis 10 : 1 verhält, und dann dieses Vorpolymer zusammen mit den restlichen Ausgangsstoffen und den verbliebenen Anteilen der Komponenten (a), (b) und (c) zum Poly(urethan) umgesetzt wird.

4. Verfahren gemäß Anspruch 3 dadurch gekennzeichnet, daß die Kettenverlängerung des Präpolymeren in einer ggf. mit Knetelementen bestückten Mehrwellenschneckenmaschine mit selbstreinigender Schneckengeometrie bei einer Temperatur von 80°C bis 260°C mit einer Venveilzeit der Reaktionsschmelze in der Schneckenmaschine von 0,5 bis zu 20 Minuten durchgeführt wird.

5. Verfahren gemäß den Ansprüchen 1 bis 4 dadurch gekennzeichnet, daß die Temperatur der Spinndüse 180 bis 240°C beträgt und die gebildeten Fäden mit einer Geschwindigkeit von 100 bis 800 m/min abgezogen werden.

6. Verfahren gemäß den Ansprüchen 1 bis 5 dadurch gekennzeichnet, daß die Fäden einer thermischen Nachbehandlung bei einer Temperatur von 60°C bis 120°C über 1 bis 96 Stunden unterzogen werden.

7. Verfahren gemäß den Ansprüchen 1 bis 6 dadurch gekennzeichnet, daß die Fäden einer thermischen Nachbehandlung bei einer Temperatur von 80°C bis 100°C über 16 bis 48 Stunden an Luft unterzogen werden.

8. Verfahren gemäß den Ansprüchen 1 bis 7 dadurch gekennzeichnet, daß die Fäden nach dem Abkühlen mit einem Streckgrad von 1,1 bis 4 verstreckt und anschließend relaxiert werden.

9. Verfahren gemäß den Ansprüchen 1 bis 8 dadurch gekennzeichnet, daß als Polyhydroxylverbindungen a) Polyesterdiole, Polyetherdiole, Polyacetaldiole, Polycarbonatdiole und andere Dihydroxylverbindungen mit einem Molekulargewicht von 1000 bis 6000 eingesetzt werden.

**10.** Verfahren gemäß den Ansprüchen 1 bis 9 dadurch gekennzeichnet, daß als Polyhydroxylverbindungen a) Polyesterdiole, Polyetherdiole oder Mischungen aus diesen, mit einem Molekulargewicht von 1500 bis 4000 eingesetzt werden.

**11.** Verfahren gemäß Anspruch 10, dadurch gekennzeichnet, daß als Polyhydroxylverbindungen a) Mischpolyesterdiolen aus sechs oder mehr Kohlenstoffatome enthaltenden Dicarbonsäuren und 2 bis 4 verschiedenen, vier oder mehr Kohlenstoffatome enthaltenden Diolen oder Polytetramethylenoxiddiole oder ihre Copolyetherdiole mit anderen etherbildenden Verbindungen wie Ethylenoxid oder Propylenoxid eingesetzt werden.

**12.** Verfahren gemäß den Ansprüchen 1 bis 11 dadurch gekennzeichnet, daß als Diisocyanate b) aromatische Diisocyanate ggf. in Kombination mit geringeren Anteilen von (cyclo)aliphatischen Diisocyanaten, oder (cyclo)aliphatische Diisocyanate allein eingesetzt werden.

**13.** Verfahren gemäß den Ansprüchen 1 bis 12 dadurch gekennzeichnet, daß als Polyisocyanate c) isocyanuratmodifizierte Polyisocyanate oder Oligomere von (cyclo)aliphatischen Diisocyanaten eingesetzt werden.

**14.** Verfahren gemäß den Ansprüchen 1 bis 13 dadurch gekennzeichnet, daß als Diole d) 1,2-Ethandiol, 1,2- und 1,3-Propandiol, 2,2-Dimethyl-1,3-propandiol, 1,6-Hexandiol, 3-Methyl-1,5-pentandiol, 1,4-Cyclohexandiol, 1,4-Bis-(2-hydroxyethoxybenzol) oder Bis-(2-hydroxyethoxy)terephthalat eingesetzt werden.

**15.** Elastanfäden erhältlich aus einem Verfahren gemäß den Ansprüchen 1 bis 14.

**16.** Elastanfäden gemäß Anspruch 15 mit einem Heat Distortion Temperature-Wert von mindestens 185°C und reiner Heißreißzeit von mindestens 10 s.

## Claims

**1.** Process for producing elastane filaments by reaction of

  a) macrodiols, preferably linear macrodiols, with a molecular weight of 1000 to 8000 with

  b) at least one diisocyanate,

  c) at least one polyisocyanate with an average functionality greater than 2,

  d) diols with a molecular weight up to 400 as chain extension agents,

  e) optionally catalysts and

  f) optionally further auxiliary substances and additives,

  spinning of the polyurethanes obtained therefrom into filaments and after-treatment of the filaments obtained, characterized in that a mixture comprising component (b) and component (c) is used in the poly(urethane) synthesis, wherein component (c) comprises a polyisocyanate having isocyanurate groups and with an average functionality greater than 2, the two components (b) and (c) are used in a quantity ratio such that the ratio between the number of isocyanate equivalents of component (b) and the number of isocyanate equivalents of component (c) is 99.5:0.5 to 80:20, the polymer synthesis takes place continuously, the reaction melt formed is directly spun with no further intermediate steps and the elastane filaments thus obtained are thermally aftertreated.

**2.** Process according to Claim 1, characterized in that the reaction of components a), b), c) and d) is carried out according to a one-shot process or according to the pre-polymer process and the sum of components b) + c) + d) in the elastic filament is 5 to 30 wt.%, related to the sum of components a) + b) + c) + d).

**3.** Process according to Claim 2, characterized in that a pre-polymer is initially produced discontinuously or continuously in several steps according to the pre-polymer process from at least parts of component (a) and at least parts of components (b) and (c), wherein in the pre-polymer the ratio between the sum of isocyanate equivalents of components (b) and (c) and the number of hydroxyl equivalents of component (a) is 1.05:1 to 10:1, and this pre-polymer is then reacted together with the remaining starting substances and the remaining quantities of components (a), (b) and (c) to produce the poly(urethane).

4. Process according to Claim 3, characterized in that the chain extension of the pre-polymer is carried out in a multiscrew extruder, optionally equipped with kneading elements, with self-cleaning screw geometry at a temperature of 80 °C to 260 °C with a residence time of the reaction melt in the extruder of 0.5 up to 20 minutes.

5. Process according to Claims 1 to 4, characterized in that the temperature of the spinneret is 180 to 240 °C and the filaments formed are drawn off at a speed of 100 to 800 m/min.

6. Process according to Claims 1 to 5, characterized in that the filaments are subjected to a thermal after-treatment for 1 to 96 hours at a temperature of 60 °C to 120 °C.

7. Process according to Claims 1 to 6, characterized in that the filaments are subjected to a thermal after-treatment in air for 16 to 48 hours at a temperature of 80 °C to 100 °C.

8. Process according to Claims 1 to 7, characterized in that after cooling the filaments are stretched with a degree of stretch of 1.1 to 4 and are then relaxed.

9. Process according to Claims 1 to 8, characterized in that polyester diols, polyether diols, polyacetal diols, polycarbonate diols and other dihydroxyl compounds with a molecular weight of 1000 to 6000 are used as polyhydroxyl compounds a).

10. Process according to Claims 1 to 9, characterized in that polyester diols, polyether diols or mixtures thereof, with a molecular weight of 1500 to 4000 are used as polyhydroxyl compounds a).

11. Process according to Claim 10, characterized in that mixed polyester diols comprising dicarboxylic acids containing six or more carbon atoms and 2 to 4 different diols containing four or more carbon atoms or polytetramethylene oxide diols or their copolyether diols with other ether-forming compounds such as ethylene oxide or propylene oxide are used as polyhydroxyl compounds a).

12. Process according to Claims 1 to 11, characterized in that aromatic diisocyanates optionally in combination with relatively small amounts of (cyclo)aliphatic diisocyanates, or (cyclo)aliphatic diisocyanates alone are used as diisocyanates b).

13. Process according to Claims 1 to 12, characterized in that isocyanurate-modified polyisocyanates or oligomers of (cyclo)aliphatic diisocyanates are used as polyisocyanates c).

14. Process according to Claims 1 to 13, characterized in that ethane-1,2-diol, propane-1,2- and -1,3-diol, 2,2-dimethyl propane-1,3-diol, hexane-1,6-diol, 3-methyl pentane-1,5-diol, 1,4-cyclohexanediol, 1,4-bis-(2-hydroxyethoxybenzene) or bis-(2-hydroxyethoxy) terephthalate are used as diols d).

15. Elastane filaments obtainable from a process according to Claims 1 to 14.

16. Elastane filaments according to Claim 15 with a heat distortion temperature value of at least 185 °C and pure hot break time of at least 10 s.

**Revendications**

1. Procédé pour fabriquer des filaments d'élasthanne par réaction de :

   a) des macrodiols, de préférence des macrodiols linéaires ayant un poids moléculaire de 1000 à 8000, avec
   b) au moins un diisocyanate,
   c) au moins un polyisocyanate de fonctionnalité moyenne supérieure à deux,
   d) des diols de poids moléculaire allant jusqu'à 400, en tant qu'agents d'allongement des chaînes,
   e) le cas échéant des catalyseurs et
   f) le cas échéant d'autres produits auxiliaires et additifs,

filage des polyuréthannes ainsi obtenus en filaments et traitement complémentaire de ces derniers, caractérisé en ce que, à la synthèse des polyuréthannes, on utilise un mélange du composant b) et du composant c), ce dernier consistant en un polyisocyanate à groupes isocyanurate ayant une fonctionnalité moyenne supérieure à 2, les deux composants b) et c) étant mis en oeuvre en quantités telles que le rapport entre le nombre des équivalents d'isocyanate du composant b) et le nombre des équivalents d'isocyanate du composant c) aille de 99,5: 0,5 à 80:20, on procède à la synthèse des polymères en continu, on file directement la masse de réaction fondue sans autre opération intermédiaire, et on soumet les filaments d'élasthanne ainsi obtenus à un traitement complémentaire thermique.

2. Procédé selon la revendication 1, caractérisé en ce que la réaction entre les composants a), b), c) et d) est réalisée en un seul stade opératoire ou par le mode opératoire au prépolymère et en ce que la somme des composants b) + c) + d) dans le filament élastique représente de 5 à 30 % en poids, par rapport à la somme des composants a) + b) + c) d).

3. Procédé selon la revendication 2, caractérisé en ce que, dans le mode opératoire au prépolymère, on prépare d'abord en plusieurs stades opératoires, en discontinu ou en continu, à partir d'une partie au moins du composant a) et d'une partie au moins des composants b) et c), un prépolymère dans lequel le rapport entre la somme des équivalents d'isocyanate des composants b) et c) et le nombre des équivalents de groupes hydroxy du composant a) va de 1,05:1 à 10:1 puis on fait réagir ce prépolymère avec les autres composants de départ et le restant des composants a), b) et c), avec formation d'un polyuréthanne.

4. Procédé selon la revendication 3, caractérisé en ce que le prépolymère est soumis à allongement des chaines dans une machine à vis à plusieurs axes éventuellement équipée d'éléments de malaxage, avec géométrie des vis permettant l'autonettoyage, à des températures de 80 à 260°C, la masse de réaction fondue passant dans la machine à vis en une durée de 0,5 à 20 min.

5. Procédé selon les revendications 1 à 4, caractérisé en ce que la température de la filière va de 180 à à 240°C et les filaments formés sont évacués à la vitesse de 100 à 800 m/min.

6. Procédé selon les revendications 1 à 5, caractérisé en ce que les filaments sont soumis à un traitement thermique complémentaire à des températures de 60 à 120°C en des durées de 1 à 96 h.

7. Procédé selon les revendications 1 à 6, caractérisé en ce que les filaments sont soumis à un traitement thermique complémentaire à des températures de 80 à 100°C pendant des durées de 16 à 48 h à l'air.

8. Procédé selon les revendications 1 à 7, caractérisé en ce que les filaments, après refroidissement, sont étirés à un rapport d'étirage de 1,1 à 4 puis relaxés.

9. Procédé selon les revendications 1 à 8, caractérisé en ce que l'on utilise en tant que composés polyhydroxylés a) des polyesterdiols, des polyétherdiols, des polyacétaldiols, des polycarbonate-diols et d'autres composés dihydroxylés de poids moléculaire 1000 à 6000.

10. Procédé selon les revendications 1 à 9, caractérisé en ce que l'on utilise en tant que composés polyhydroxylés a) des polyesterdiols, des polyétherdiols ou des mélanges de ces composés, à un poids moléculaire de 1500 à 4000.

11. Procédé selon la revendication 10, caractérisé en ce que l'on utilise en tant que composés polyhydroxylés a) des copolyesterdiols d'acides dicarboxyliques à six atomes de carbone ou plus et de deux à quatre diols différents contenant quatre atomes de carbone ou plus ou d'oxydes de polytétraméthylène-diols ou de leurs copolyétherdiols avec d'autres composés formant des éthers, tels que l'oxyde d'éthylène ou l'oxyde de propylène.

12. Procédé selon les revendications 1 à 11, caractérisé en ce que l'on utilise en tant que diisocyanates b) des diisocyanates aromatiques éventuellement en combinaison avec des proportions plus faibles de diisocyanates (cyclo) aliphatiques, ou bien des diisocyanates (cyclo)aliphatiques.

13. Procédé selon les revendications 1 à 12, caractérisé en ce que l'on utilise en tant que polyisocyanates c) des polyisocyanates à modification isocyanurate ou des oligomères de diisocyanates (cyclo)aliphatiques.

14. Procédé selon les revendications 1 à 13, caractérisé en ce que l'on utilise en tant que diols d) le 1,2-éthanediol, le 1,2- ou le 1,3-propanediol, le 2,2-diméthyl-1,3-propanediol, le 1,6-hexanediol, le 3-méthyl-1,5-pentanediol, le 1,4-cyclohexanediol, le 1,4-bis-(2-hydroxyéthoxybenzène) ou le bis-(2-hydroxyéthoxy)téréphtalate.

15. Filaments d'élasthanne obtenus par un procédé selon les revendications 1 à 14.

16. Filaments d'élasthanne selon la revendication 15, ayant une température de déformation à la chaleur d'au moins 185°C et une durée de rupture à la chaleur pure d'au moins 10s.